# EUROPEAN PATENT SPECIFICATION

(11) **EP 1 604 570 B1**
(45) Date of publication and mention of the grant of the patent: **12.01.2011**
(21) Application number: 05076380.4
(22) Date of filing: 13.06.2005
(51) Int. Cl.: A01N 47/20, A01N 37/06, A01N 37/02, A01N 25/04, A01N 25/02, A01N 3/00

(54) **Sprout inhibitor for potatoes**
Keimungshemmendes Mittel für Kartoffeln
Inhibiteur de germination pour pommes de terre

(30) Priority: 11.06.2004 NL 1026390
(43) Date of publication of application: 14.12.2005
(73) Proprietor: Certis Europe B.V., 3604 BB Maarssen (NL)
(72) Inventor: De Vries, Robert Georg, 7312 CD Apeldoorn (NL)
(74) Representative: Winckels, Johannes Hubertus F.

(56) References cited:
- EP-A- 0 394 961
- WO-A-94/28716
- WO-A-96/22020
- DD-A5- 292 361
- DE-A1- 3 247 050
- DE-U1- 29 906 961
- US-A- 3 326 664
- DATABASE CHEMABS [Online] CHEMICAL ABSTRACTS SERVICE, COLUMBUS, OHIO, US; XP002320987 retrieved from STN-INTERNATIONAL Database accession no. 96:157413 & JP 57 014504 A (INSTITUTE FOR PRODUCTION AND DEVELOPMENT SCIENCE) 25 January 1982 (1982-01-25)

## Description

The invention relates to a sprout inhibiting composition based on Chlorpropham and a solvent.

After harvesting, potatoes are stored until further processing (shed storage). This can be storage as seed material for a next season, but also storage prior to industrial processing or the processing into products that are intended directly for the consumer. During this storage, it is of importance that the quality of the potatoes remain guaranteed over a prolonged period of time. It is also of importance that the conditions in which the potatoes are stored be kept well in hand. The climate must not be too humid, otherwise rot arises. When the climate is too dry, the turgor of the potato decreases and the potato becomes softer. A problem in preserving potatoes is that the potatoes may start to sprout, also referred to as shooting. Potato sprouting is the onset of the germination processes and the formation of so-called shoots which can later grow out to form plant and roots. The nutrient medium for the sprouts is the potato tuber itself. This means that a loss of quality arises. Also, the potato exhibits visually unattractive and unsavory spots and undesirable coloring of the crop.

Sprouting can be prevented by storing the potatoes at a temperature of 2°C, but this gives rise to the formation of reducing sugars which cause the potatoes in subsequent frying processes such as deep-frying to acquire a brown color and to taste sweet. For these reasons, potatoes are typically stored at a temperature between 5 and 8°C. At this temperature, the problem of the formation of reducing sugars does not occur or is considerably smaller, but upon prolonged storage sprouting cannot be prevented entirely.

To prevent potato sprouting, in the state of the art, sprout inhibitors are utilized which are applied to the potatoes and thus prevent germination.

Chlorpropham (CIPC) is a well known compound which is widely applied as a sprout inhibitor in potatoes.

The use of chlorpropham in liquid form for fogging is known *inter alia* from Dutch patent 1011952, in which solutions and emulsions of chlorpropham with an oil are described. Also, solutions of chlorpropham with dichloromethane are known and commercially available.

A disadvantage of this product is that it is only applicable in hot-fogging equipment. This is because cold fogging gives rise to clogging of the spray nozzles. It would be an advantage, however, if chlorpropham can be used in cold fogging equipment, in view of the disadvantages of hot fogging. In fact, the hot fogging equipment is noisy and it is also rather unreliable since it is difficult to start and often cuts out during use.

It is therefore an object of the invention to provide a composition based on chlorpropham, which can be used successfully in cold fogging.

An important use of potatoes is the production of french fries. The quality and suitability of the potatoes for french fries is determined on the basis of the frying grade. For the producer of potatoes it is therefore important that the frying grade of the produced potatoes be as good as possible.

The invention concerns a composition based on chlorpropham, which not only has the advantage that it allows of cold fogging, but in addition yields an improvement of the frying grade of the potatoes.

Accordingly, the invention is characterized by the use of at least one C6-C10 alkyl ester of a C14-C18 fatty acid of mineral or animal or vegetable origin as a solvent for chlorpropham.

As a solvent as used in the composition according to the invention, the above mentioned esters of fatty acids of mineral or animal or vegetable origin are employed. It is preferred to use the solvent in an amount of 1.0 - 95.0 wt. %, based on the total weight of the composition according to the invention, preferably 5.0 -75.0 wt. %, more preferably 35.0 - 70.0 wt. %.

As alkyl component, saturated, branched or unbranched, alkanes having 6 to 10 carbon atoms can be used.

As a fatty acid component in the composition according to the present invention fatty acids having a chain length of 14 to 18 C-atoms of mineral, vegetable or animal origin are used, such as saturated or (poly)unsaturated fatty acids.

Preferably used are esters of stearic acid, myristic acid or palmitic acid, such as decyl oleate, and 2-ethyl hexyl palmitate.

As solvent as used in the composition according to the invention, in addition to esters of fatty acids of mineral, vegetable or animal origin, also mixtures of esters of fatty acids with oils can be used.

As oil component in the composition according to the present invention, any oil of vegetable, mineral or animal origin can be used, such as saturated or (poly)unsaturated oils consisting of a fatty acid and a polyalcohol such as glycol or glycerol, which may or may not be wholly or partly saponified, as well as any combination thereof. It is also possible to use mixtures of such compounds or mixtures of vegetable, animal and/or mineral origin. Preferably used are linseed oil, rapeseed oil, soybean oil or derivatives thereof, most preferably soybean oil or rapeseed oil.

Further suitable solvents which can be used in combination with the fatty acid alkyl ester used according to the invention, are, for instance, solvents of mineral origin, such as all aliphatic and aromatic solvents, alcohols, esters, ethers, ketones, aldehyde and polyalcohol ethers. These solvents may or may not be (poly)chlorinated. Examples of these solvents are xylene, alcohols such as glycerols (for instance polyethylene glycol) or polyethylene glycol ethers and polypropylene glycol ethers having as ether group methyl, ethyl or any alkyl or derivatives or mixtures thereof.

Also, suitable solvents are esters of the lactate type, such as butyl lactate and ethylhexyl lactate.

In addition, suitable solvents are lactams and lactones, among which poly alkyl vinyl pyrrolidone.

A typical component is 1-methyl-2-pyrrolidone or gamma butyrolactam in an amount of 1.0 - 25.0 wt. %, based on the total weight of the composition according to the invention, preferably 2.0-15.0 wt. %, more preferably 2.5-10.0 wt. %.

Chlorpropham under normal conditions is a solid, which melts at approximately 40°C and can thus be used at temperatures above 40°C without any further diluents or other additions. A preferred composition according to the invention comprises between 1.0 and 50.0 wt. % of chlorpropham, based on the total weight of the composition according to the invention, preferably between 20.0 and 40.0 wt. % and further also solvents, thickeners, surfactants and other conventional additions.

The composition can also be used in the form of an emulsion. To this end, emulsifiers can be added. These emulsifiers can be cationic, anionic or nonionic surfactants or mixtures thereof. The emulsifiers can be of mineral, animal or vegetable origin or mixtures thereof. Examples are calcium dodecylbenzene sulfonates, nonyl phenol polyglycol ethers, ethoxylated fatty acid alcohols or amines or derivatives or combinations thereof.

It is conventional to store potatoes in bulk or in large batches or in cells, boxes or crates in a storage space. By means of ventilation systems, cool air can be blown through the potatoes, and optionally the air can be additionally cooled. Outside storage of potatoes can be done, in addition to the ways described above, in a pit or a pile, and the present invention applies to these alternatives as well.

In one embodiment of the present invention, the agent is distributed over the potatoes by spraying or fogging using means known per se for this purpose in the art, such as mist nozzles and so-called spray disks. Such misting of the solution can be done in any phase after harvesting. At any time in the storage process, it is possible to apply the agent to the potatoes. The agent is so composed that no additional time is required for drying. Spraying the potatoes can therefore be done, for instance, during transport on a conveyor belt or at the end of the conveyor belt when the potatoes fall onto a storage pile or into a box. The treatment with this agent can also take place at any further point in the sequence of actions between harvest and storage or during storage.

For a finer distribution of the active substance, also a diluted composition can be used.. To this end, the composition according to the present invention is diluted with a suitable diluent and then homogenized, optionally by the use of an emulsifier.

The amount of diluent that is used to dilute the solution is such that when the solution is sprayed over the potatoes, the diluent can easily evaporate. When water is used as diluent, this should be done in such an amount that a proper distribution of the agent over the potatoes is obtained without the moisture content of the potatoes, or the humidity in the space where the potatoes are preserved, increasing to such an extent as to give rise to rotting processes.

According to a preferred embodiment of the invention, cold fogging is used. The equipment needed for that purpose is known. Surprisingly, it has been found that according to the invention an improvement of the frying grade for french fries is obtained, compared with the current hot fogging.

It has also been found that in the case of monthly use, or in any case use at fairly large intervals, such as at least 15 days, for instance four weeks, a still further improvement of the frying grade is obtained, compared with daily use.

The invention is elucidated, but by no means limited, by the following example:

### Example:

A solution is prepared which consists of:
32.35 wt. % of chlorpropham 97.5%
62.65 wt. % of C6-C10 alkyl ester of a C14-C18 fatty acid
5.00 wt. % of 1-methyl-2-pyrrolidone

Dosage is 60 ml per 1,000 kg of potatoes and can be applied, depending on the equipment used, by both hot fogging and cold fogging.

After application, it is visible with the naked eye that the active substance is distributed uniformly over the potatoes as small crystals.

The potatoes hardly sprout, if at all, and have good keeping qualities under the usual storage conditions.

Upon performing a frying test on the potatoes thus treated and preserved, an excellent result is obtained.

As appears from the following table and the associated figure, cold fogging, and in particular at longer intervals, yields to the farmer and the potato processing industry a product of clearly better quality.

| **Determination of frying index of potatoes of the variety Bintje in different applications with the chlorprofam solution according to the Example** | | | | | | | | | | | | | |
|---|---|---|---|---|---|---|---|---|---|---|---|---|---|
| | | | | | | | | | | | | | |
| | | | | | **Class** | | | | | | | **Total of** | **Frying index** |
| **Cell** | **Height of layer** | **Application** | **Frequency** | **Sample** | **000** | **00** | **0** | **1** | **2** | **3** | **4** | **french fry strips** | |
| | | | | | | | | | | | | | |

| **Date of analysis: 19-02-04** | | | | | | | | | | | | | |
|---|---|---|---|---|---|---|---|---|---|---|---|---|---|
| **27** | Topmost | Swingfog | 4-weekly | 1 | 0 | 0 | 2 | 8 | 6 | 3 | 1 | 20 | 3.65 |
| | Topmost | | | 2 | 0 | 0 | 1 | 10 | 6 | 3 | 0 | 20 | 3.55 |
| **28** | Topmost | Cyclomatic | 4-weekly | 3 | 0 | 0 | 3 | 6 | 9 | 2 | 0 | 20 | 3.50 |
| | Topmost | | | 4 | 0 | 0 | 1 | 11 | 7 | 1 | 0 | 20 | 3.40 |
| **29** | Topmost | Cyclomatic | daily | 5 | 0 | 0 | 3 | 13 | 4 | 0 | 0 | 20 | 3.05 |
| | Topmost | | | 6 | 0 | 0 | 5 | 10 | 2 | 3 | 0 | 20 | 3.15 |

| **Date of analysis: 19-04-04** | | | | | | | | | | | | | |
|---|---|---|---|---|---|---|---|---|---|---|---|---|---|
| **27** | Topmost | Swingfog | 4-weekly | 1 | 0 | 0 | 2 | | 8 10 | 0 | 0 | 20 | 3.40 |
| | Topmost | | | 2 | 0 | 0 | 3 | 6 | 11 | 0 | 0 | 20 | 3.40 |
| **28** | Topmost | Cyclomatic | 4-weekly | 3 | 0 | 0 | 5 | 7 | 8 | 0 | 0 | 20 | 3.15 |
| | Topmost | | | 4 | 0 | 1 | 6 | 6 | 7 | 0 | 0 | 20 | 2.95 |
| **29** | Topmost | Cyclomatic | daily | 5 | 0 | 2 | 5 | 9 | 4 | 0 | 0 | 20 | 2.75 |
| | Topmost | | | 6 | 0 | 1 | 7 | 9 | 3 | 0 | 0 | 20 | 2.70 |

| **Date of analysis: 19-05-04** | | | | | | | | | | | | | |
|---|---|---|---|---|---|---|---|---|---|---|---|---|---|
| **27** | 0.5 m | Swingfog | 4-weekly | 1 | 0 | 0 | 0 | 7 | 12 | 1 | 0 | 20 | 3.70 |
| | 1.5 m | | | 2 | 0 | 0 | 2 | 6 | 10 | 2 | 0 | 20 | 3.60 |
| | 2.5 m | | | 3 | 0 | 0 | 1 | 6 | 9 | 4 | 0 | 20 | 3.80 |
| **28** | 0.5 m | Cyclomatic | 4-weekly | 4 | 0 | 0 | 6 | 11 | 2 | 1 | 0 | 20 | 2.90 |
| | 1.5 m | | | 5 | 0 | 0 | 5 | 10 | 3 | 2 | 0 | 20 | 3.10 |
| | 2.5 m | | | 6 | 0 | 0 | 3 | 10 | 4 | 3 | 0 | 20 | 3.35 |
| **29** | 0.5 m | Cyclomatic | daily | 7 | 0 | 0 | 2 | 13 | 5 | 0 | 0 | 20 | 3.15 |
| | 1.5 m | | | 8 | 0 | 0 | 4 | 7 | 9 | 0 | 0 | 20 | 3.25 |
| | 2.5 m | | | 9 | 0 | 0 | 4 | 12 | 3 | 1 | 0 | 20 | 3.05 |

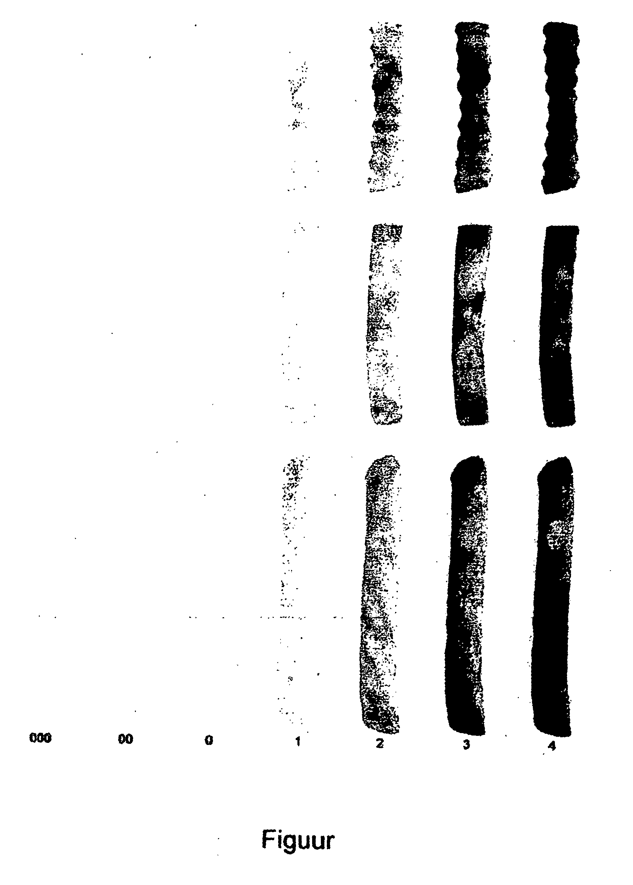

## Claims

1. A composition for use as a potato sprout inhibitor, comprising a combination of chlorpropham and as solvent a C6-C10 alkyl eater of a C14-C18 fatty acid of mineral, animal or vegetable origin.

2. A composition according to claim 1, wherein the composition contains solvent in an amount of 1.0 - 95.0 wt. %, based on the total weight of the composition.

3. A composition according to claim 1 or 2, wherein the composition further comprises a second solvent.

4. A composition according to claims 1-8, wherein the second solvent is a lactone or a lactam, in an amount of 1.0 - 25.0 wt. %, based on the total weight of the composition.

5. A composition according to claims 1-4, **characterized in that** chlorpropham is present in an amount of 1.0 - 50.0 wt. %, based on the total weight of the composition.

6. A method for protecting potatoes from premature sprouting by treating the potatoes with a composition according to claims 1-5 by the technique of hot fogging or by the technique of cold fogging.

7. Use of a composition as defined in claims 1-5 for protecting potatoes from premature sprouting.

8. A method for protecting potatoes from premature sprouting by treating the potatoes with a composition according to claims 1-5 by cold fogging or hot fogging.

9. Use of a composition according to claims 1-5 for protecting potatoes from premature sprouting.

## Patentansprüche

1. Zusammensetzung zur Verwendung als Kartoffel-Keimungsinhibitor, umfassend eine Kombination aus Chlorpropham und als Lösungsmittel einen (C₆-C₁₀)Alkylester einer (C₁₄-C₁₈)Fettsäure mineralischen, tierischen oder pflanzlichen Ursprungs.

2. Zusammensetzung nach Anspruch 1, wobei die Zusammensetzung Lösungsmittel in einer Menge von 1,0 bis 95,0 Gew.-% enthält, bezogen auf das Gesamtgewicht der Zusammensetzung.

3. Zusammensetzung nach Anspruch 1 oder 2, wobei die Zusammensetzung darüber hinaus ein zweites Lösungsmittel enthält.

4. Zusammensetzung nach den Ansprüchen 1 bis 3, wobei das zweite Lösungsmittel ein Lacton oder ein Lactam in einer Menge von 1,0 bis 25,0 Gew.-% ist, bezogen auf das Gesamtgewicht der Zusammensetzung.

5. Zusammensetzung nach den Ansprüchen 1 bis 4, **dadurch** charakterisiert, dass Chlorpropham in einer Menge von 1,0 bis 50,0 Gew.-% vorliegt, bezogen auf das Gesamtgewicht der Zusammensetzung.

6. Verfahren zum Schutz von Kartoffeln vor vorzeitigem Keimen durch Behandeln der Kartoffeln mit einer Zusammensetzung nach den Ansprüchen 1 bis 5 mit der Technik des Heißvernebelns oder mit der Technik des Kaltvernebelns.

7. Verwendung einer Zusammensetzung wie in den Ansprüchen 1 bis 5 definiert zum Schutz von Kartoffeln vor vorzeitigem Keimen.

8. Verfahren zum Schutz von Kartoffeln vor vorzeitigem Keimen durch Behandeln der Kartoffeln mit einer Zusammensetzung nach den Ansprüchen 1 bis 5 durch Kaltvernebeln oder Heißvernebeln.

9. Verwendung einer Zusammensetzung nach den Ansprüchen 1 bis 5 zum Schutz von Kartoffeln vor vorzeitigem Keimen.

## Revendications

1. Composition à utiliser comme inhibiteur de germination pour pommes de terre, comprenant une combinaison de chlorprophame et comme solvant d'un ester alkylique en C6 à C10 d'un acide gras en C14 à C18 d'origine minérale, animale ou végétale.

2. Composition selon la revendication 1, dans laquelle la composition contient un solvant en une quantité de 1,0 à 95,0 % en poids par rapport au poids total de la composition.

3. Composition selon la revendication 1 ou 2, dans laquelle la composition comprend en outre un deuxième solvant.

4. Composition selon les revendications 1 à 3, dans laquelle le deuxième solvant est une lactone ou un lactame, en une quantité de 1,0 à 25,0 % en poids sur la base du poids total de la composition.

5. Composition selon les revendications 1 à 4, **caractérisée en ce que** le chlorprophame est présent en une quantité de 1,0 à 50,0 % en poids sur la base du poids total de la composition.

6. Méthode de protection de pommes de terre contre une germination prématurée par traitement des pommes de terre avec une composition selon les revendications 1 à 5, par la technique de nébulisation à chaud ou par la technique de nébulisation à froid.

7. Utilisation d'une composition selon les revendications 1 à 5, pour la protection de pommes de terres contre une germination prématurée.

8. Méthode de protection de pommes de terre contre une germination prématurée par traitement des pommes de terre avec une composition selon les revendications 1 à 5 par nébulisation à froid ou nébulisation à chaud.

9. Utilisation d'une composition selon les revendications 1 à 5, pour la protection des pommes de terre contre une germination prématurée.
